Europäisches Patentamt

European Patent Office

Office européen des brevets

(19)

(11) EP 1 699 127 A1

(12) EUROPEAN PATENT APPLICATION

(43) Date of publication:
06.09.2006 Bulletin 2006/36

(51) Int Cl.:
H02K 41/03 (2006.01)      H02K 15/02 (2006.01)

(21) Application number: 06004124.1

(22) Date of filing: 01.03.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 02.03.2005 US 71844

(71) Applicant: Eaton Corporation
Cleveland, Ohio 44114-2584 (US)

(72) Inventor: Kim, Tae-Kyung
Sterling Heights, Michigan 48314 (US)

(74) Representative: Rüger, Barthelt & Abel
Patentanwälte
Postfach 10 04 61
73704 Esslingen a. N. (DE)

Remarks:
Amended claims in accordance with Rule 86 (2) EPC.

(54) **Magnetic circuit apparatus and method of manufacturing the same.**

(57)     An improved magnetic circuit apparatus and method for manufacturing (300) is disclosed. In one embodiment, the improved magnetic circuit includes an upper assembly and a lower assembly. A selected amount of magnetic flux-enhancing material (210) is disposed within an air gap formed between the upper and lower assemblies, thereby focusing magnetic flux between the assemblies. The magnetic flux-enhancing material (210) reduces magnetic flux loss across the air gap, and thereby eliminates post assembly calibration of the magnetic circuit. When the upper assembly and the lower assembly are fitted together, no calibration is required to tune the magnetic circuit to specified tolerances.

FIGURE 2b

**Description**

**BACKGROUND**

The present teachings generally relates to apparatuses and methods for improving magnetic circuits, and particularly for improving manufacturing yield of such magnetic circuits.

Magnetic circuits are employed in a wide variety of applications. In electro-mechanical apparatuses, magnetic circuits are often adapted to actuate an associated mechanical part. One example of a magnetic circuit used to actuate a mechanical part is a solenoid.

Production yield is of concern to the manufacturer when designing and manufacturing solenoids. Production testing is performed to ensure quality and compliance with design specifications prior to releasing manufactured solenoids for sale or installation into another machine. One such production test relates to tuning a "magnetic circuit" inside a solenoid.

The magnetic circuit is somewhat analogous to an electrical circuit. For example, the magnetic circuit has several components that are required to complete the circuit so that magnetic flux is harnessed according to specified tolerances. One such component in the magnetic circuit is referred to in the art as a reluctance element (which is analogous to a resistive element in an electrical circuit). One commonly used reluctance element is an "air gap", through which magnetic flux passes.

As is well known, "permeability" of a material determines the degree to which the material resists magnetic flux flow. "Permeability" ("$\mu$") is typically measured in units of Tesla ("T") times Meters ("m") per Ampere ("Tm/A"). Described in another way, permeability describes the ease of passage of magnetic lines of force through a material. Measurements of permeability are taken with permeability of free space as a reference. The permeability of free space ("$\mu_o$") has a fixed value of $4\pi \times 10^{-7}$ Tm/A. By contrast, permeability of a material, such as iron, has a permeability of several thousand times that of free space.

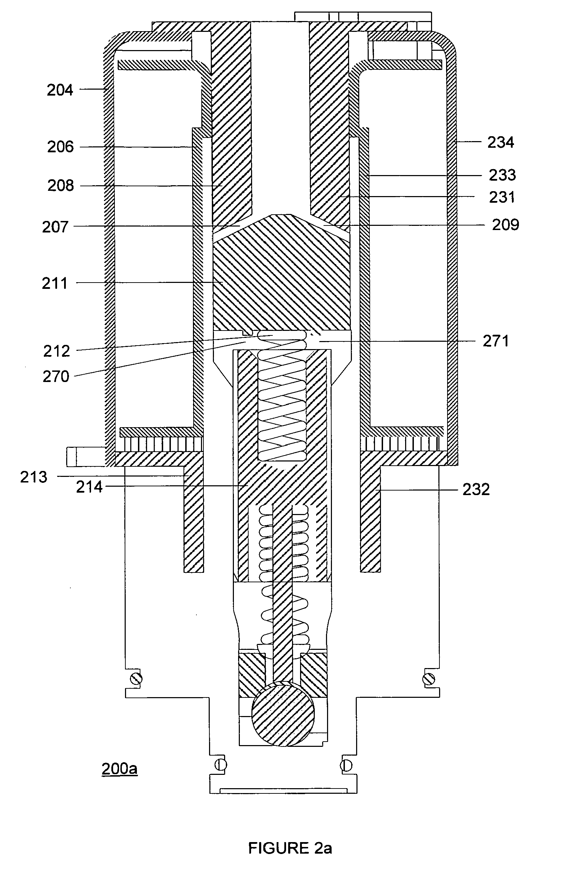

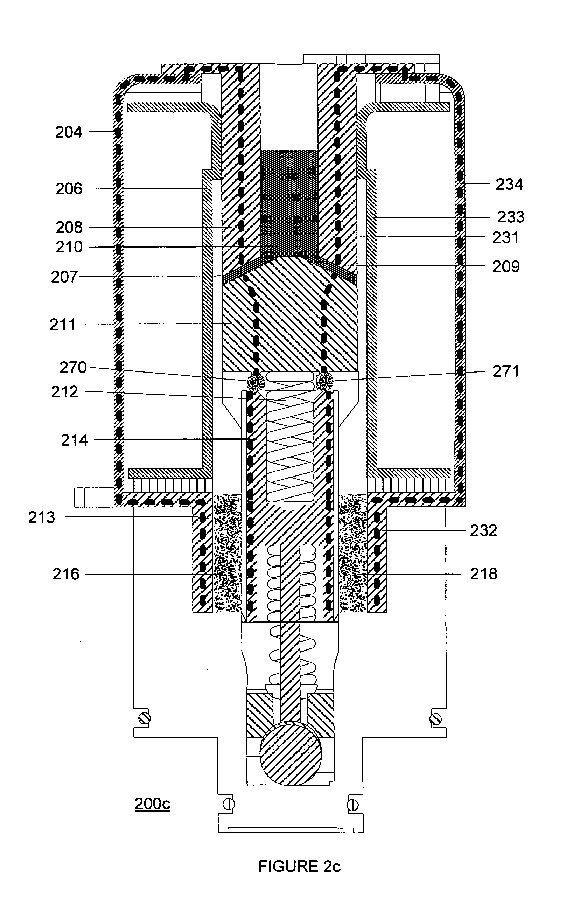

In one embodiment, the magnetic circuit 200c of FIGURE 2c is adapted to actuate a mechanical part 214, by converting a magneto-motive force ("MMF") into linear mechanical power. An MMF causes magnetic lines of force throughout a circuit, and is the magnetic equivalent of an electro-motive force ("EMF") in an electric circuit. Magnetic flux ("$\Phi$") is analogous to current in an electric circuit. Flux density comprises the flux divided by the cross-sectional area of the magnetic conductor transporting the flux. Reluctance ("R") comprises a ratio of MMF to flux in a magnetic conductor. Reluctance is analogous to electrical resistance. Equation 1 shows the mathematical equation for reluctance in a magnetic circuit.

$$\textbf{Equation 1:} \quad R = MMF / \Phi$$

Another calculation for a reluctance element involves a ratio of a permeability ($\mu$) of a material, multiplied by an average length (L) of a selected path in a material, divided by a cross-sectional area (A') of the material, as shown in Equation 2 below.

$$\textbf{Equation 2:} \quad R = \mu L / A'$$

As is well known, different materials have different magnetic properties. One commonly used material in magnetic apparatuses is iron. As most molecules in iron easily turn under an influence of a magnetizing force, the overall effect of magnetizing iron is quite strong. In other materials, few or none of the molecules turn, due to the rigid structure of the materials. Hence, iron has a very low permeability value (e.g, $6000 \times 4\pi \times 10^{-7}$ Tm/A).

It is well-known that magnetic flux transmitted through free space, such as, for example, an air gap, loses substantial amounts of force, due primarily to the permeability of free space. That is, the magnetic flux transmitted across an air gap is commonly referred to as "lossy", due to the fact that much of the magnetic force is lost during transmission across the air gap. By contrast, transmission of magnetic flux through iron is not "lossy". That is, the magnetic flux lines passing through iron do not lose as much strength as do the magnetic flux lines passing through air. This is due primarily to the difference in permeability of free space ($4\pi \times 10^{-7}$ Tm/A) and the permeability of iron (e.g., $6000 \times 4\pi \times 10^{-7}$ Tm/A).

Each solenoid produced by a production facility assembly line has slight variations in the air gap. Therefore the air gap requires fine tuning in order to meet desired design tolerance and parameters. Such variances in air gap tolerances are caused by typical manufacturing tolerances of several different parts that are subsequently assembled together. Any variation in the air gap will cause variations in a loss of magnetic flux passing through the air gap, which degrades solenoid performance. In order to calibrate for manufacturing variations, air gaps are measured and calibrations are performed to ensure proper solenoid performance.

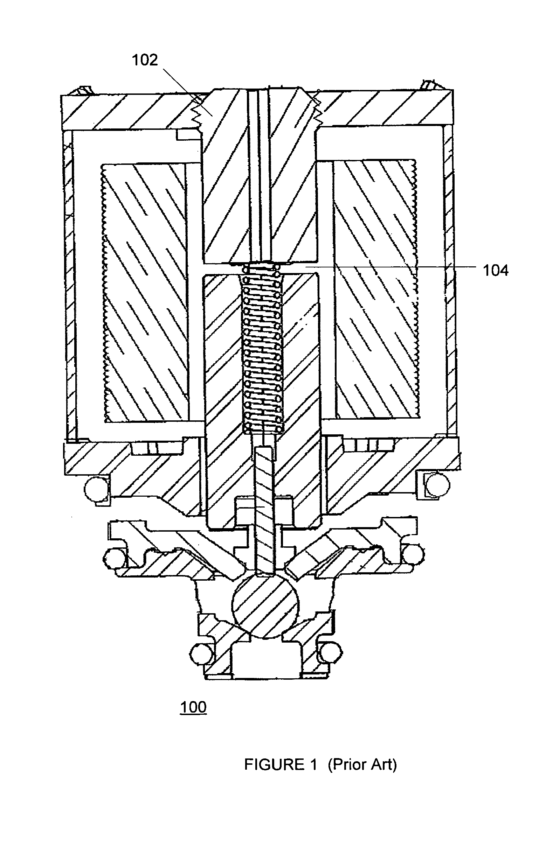

Referring now to FIGURE 1, a typical solenoid 100 is illustrated having a calibration feature 102. As is well known in the solenoid manufacturing arts, a prior art solenoid assembly is typically constructed by fitting a top assembly part to a bottom assembly part. Fitting the top assembly part to the bottom assembly part creates an air gap 104. Due to variations in individual component tolerances, variations in the dimensions of the air gap 104 results during assembly. The variations in the dimension of the air gap 104 can cause a substantial variation in a transfer of magnetic flux across the air gap 104. These variations in air gap dimension are typically compensated for using the calibration feature 102. The calibration feature is typically used by production test personnel to tune the magnetic circuit within the solenoid 100. The magnetic circuit is tuned by adjusting the calibration feature 102 (typically by screwing the calibration feature 102 clockwise or counter-clockwise) which, in turn, changes a vertical dimension of the air gap 104. The air gap 104 comprises a reluctance element which magnetic flux passes through. The air gap 104 must be tuned precisely in order to ensure proper functioning of the solenoid 100. A constant working air gap 104 is necessary for a properly tuned magnetic circuit.

A magnetic circuit that requires no calibration subsequent to assembly will allow substantial cost savings in the manufacturing of magnetic circuits generally, and in the manufacturing of solenoid circuits specifically.

Therefore, a need exists for an apparatus and method that addresses the aforementioned issues. The present teachings provide such an apparatus and method.

## SUMMARY

In one embodiment, an improved magnetic circuit apparatus is disclosed. In one embodiment, the improved magnetic circuit comprises a magnetic circuit assembly and a predetermined quantity of flux-enhancing material. The magnetic circuit assembly comprises, *inter alia,* an external canister magnetically coupled to a magnetic flux collector member. The magnetic circuit assembly also comprises a first reluctance element, having a first end and a second end, wherein the first end is operatively coupled to the magnetic flux collector member. A pole piece element is operatively coupled to the magnetic flux collector member via the second end of the first reluctance element. A predetermined quantity of flux-enhancing material is disposed between the first and the second end of the first reluctance element. The predetermined quantity of flux-enhancing material is adapted to reduce loss associated with the magnetic flux across the first reluctance element of the magnetic circuit.

In one embodiment, an improved solenoid apparatus having a magnetic circuit is disclosed. The magnetic circuit is adapted to actuate a mechanical part associated with the solenoid. In this embodiment, the solenoid comprises, *inter alia,* an external canister magnetically connected to a magnetic flux collector member and an air gap. The air gap has a first end and a second end, wherein the first end is associated with the magnetic flux collector member. A pole piece element is operatively coupled to the magnetic flux collector member via the second end of the air gap. In one embodiment, a selected quantity of iron powder is disposed between the first end and the second end of the air gap. The selected quantity of iron powder reduces loss associated with magnetic flux across the air gap.

In one embodiment, a method of improving manufacturing yield of assembled magnetic circuits is disclosed. The method comprises producing a magnetic circuit having an upper assembly and a lower assembly, wherein the upper assembly has an associated and corresponding first reluctance element, and wherein the lower assembly has an associated and corresponding second reluctance element. The method proceeds by setting a dimension for the second reluctance element. Next, the method provides a selected quantity of flux-enhancing material. Next, the selected quantity of flux-enhancing material is coupled to the upper assembly, inside the first reluctance element. Finally, the method couples the upper assembly to the lower assembly.

## BRIEF DESCRIPTION OF THE DRAWINGS

Embodiments of the present disclosure will be more readily understood by reference to the following figures, in which like reference numbers and designations indicate like elements.

FIGURE 1 shows a cross-sectional view of a prior art magnetic circuit in a solenoid assembly, including a calibration feature required for post-assembly tuning of the magnetic circuit.

FIGURE 2a shows a cross-sectional view of an improved magnetic circuit shown in a "switched-off" configuration in an assembly having no post-assembly calibration feature.

FIGURE 2b shows a cross-sectional view of an embodiment of a magnetic circuit shown in a switched-off configuration, wherein the inventive magnetic circuit includes flux-enhancing material.

FIGURE 2c illustrates in cross-section the inventive magnetic circuit of FIGURE 2b, showing magnetic flux flow throughout the circuit when the circuit is in a "switched-on" configuration.

FIGURE 2d shows a cross-sectional view of a lower assembly of an embodiment of the inventive magnetic circuit.

FIGURE 2e shows a cross-sectional view of an upper assembly of an embodiment of the magnetic circuit.

FIGURE 2f shows a cross-sectional view of an upper assembly of an embodiment of the magnetic circuit including flux-enhancing material.

FIGURE 3 illustrates a method of improving the manufacture of magnetic circuits.

**DETAILED DESCRIPTION**

The present teachings disclose an improved magnetic circuit apparatus and method.

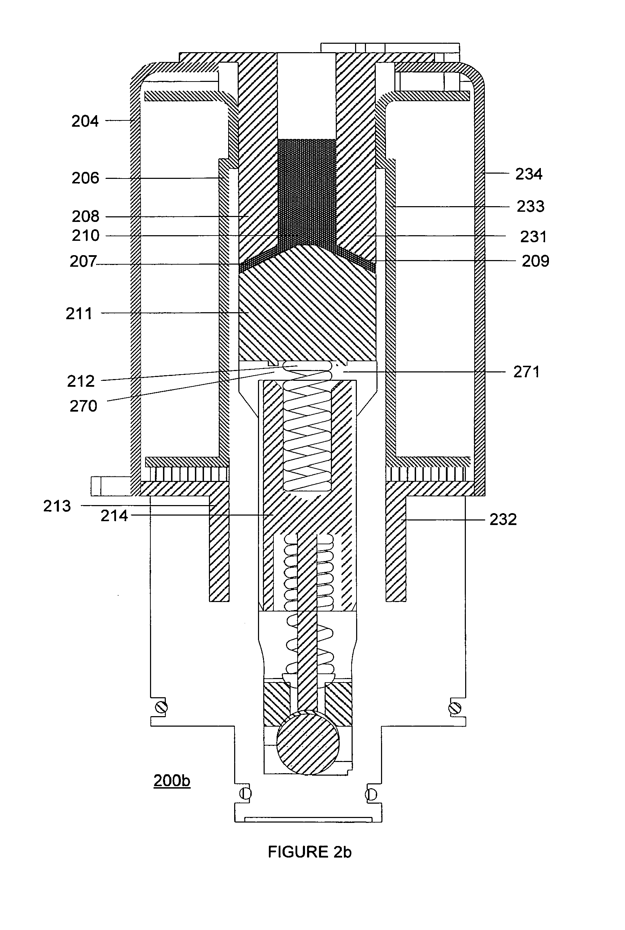

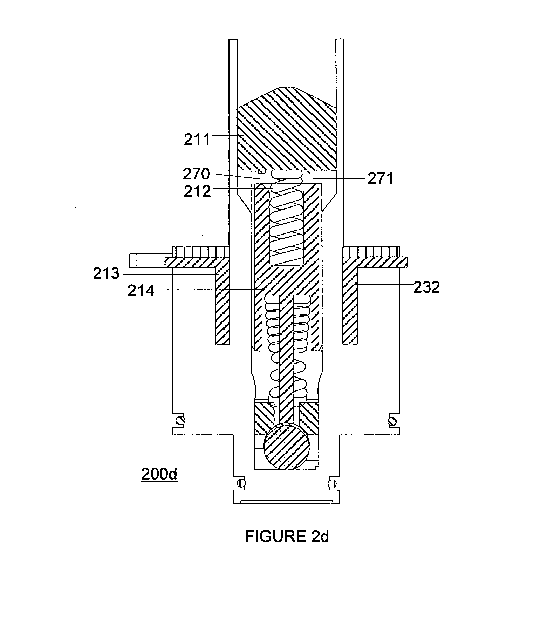

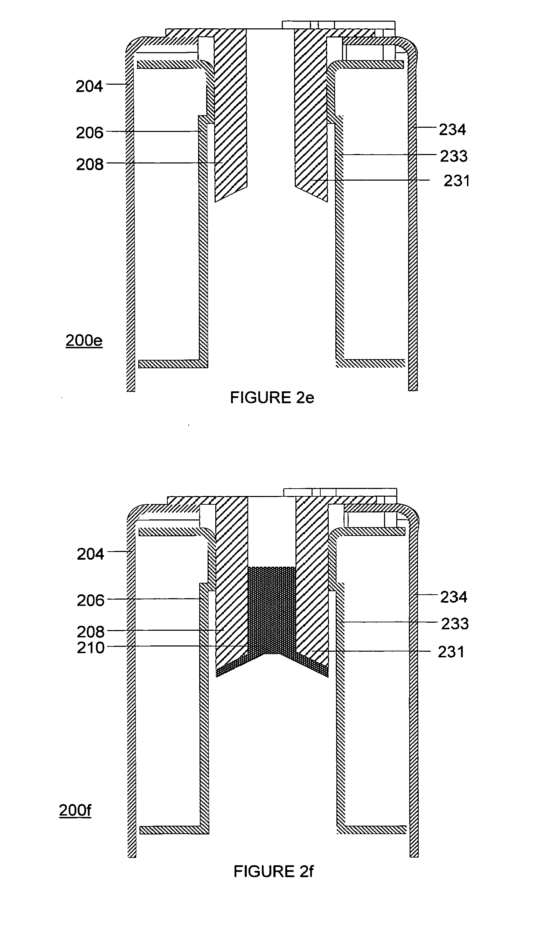

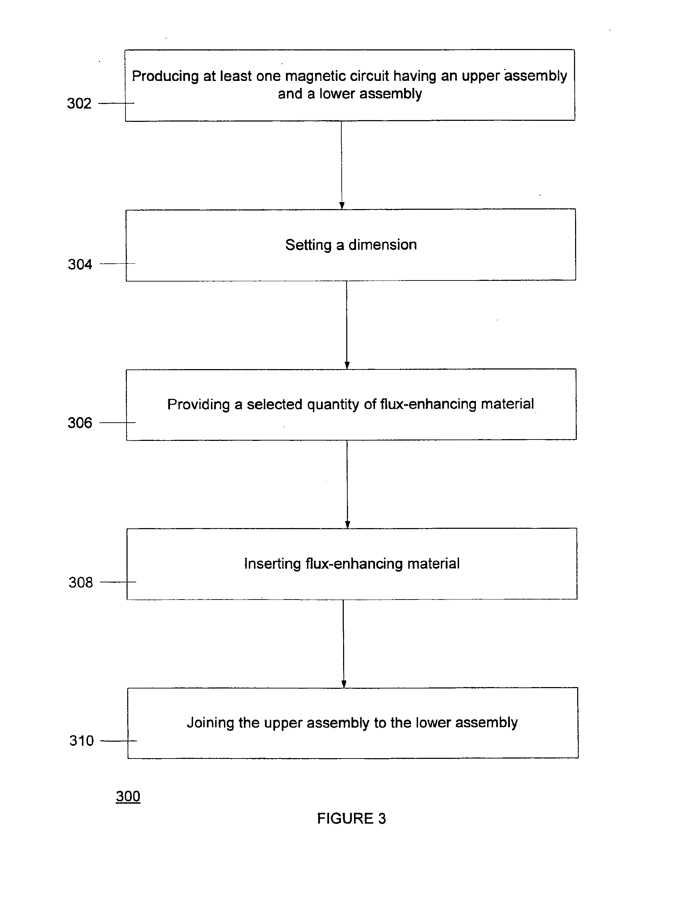

FIGURE 2a shows a set of elements associated with a magnetic circuit 200a. FIGURE 2b shows a set of elements associated with a magnetic circuit 200b. The magnet circuit 200b of FIGURE 2b is similar to the magnetic circuit 200a, with the exception that the magnetic circuit 200b includes a selected quantity of flux-enhancing material. The magnetic circuits 200a and 200b are shown in a switched off configuration, and therefore have no flux flowing therethrough. By contrast, the description of the magnetic circuit 200c shown in FIGURE 2c discloses a circuit that is similar to that shown in FIGURE 2b, except that the magnetic circuit 200c is shown in a switch-on configuration. FIGURES 2d, 2e, and 2f illustrate upper and lower assemblies of an inventive magnetic circuit. FIGURE 3 shows an improved solenoid manufacturing method.

Referring now to FIGURE 2a, an improved magnetic circuit apparatus 200a is shown. The magnetic circuit 200a of FIGURE 2a is shown in a switched off configuration. Magnetic flux is not allowed to flow through the circuit. As shown in FIGURE 2a, in one embodiment the magnetic circuit 200a includes external canisters 204 and 234, which are magnetically connected to a set of magnetic flux collector members 208 and 231. In one embodiment, the set of magnetic flux collector members 208 and 231 comprise a set of weak upper flux collectors. A first set of reluctance elements 207 and 209 have a first end positioned at a top portion of the reluctance elements. The reluctance elements 207 and 209 also have a second end positioned at a bottom portion of the reluctance elements 207 and 209. In one embodiment, the reluctance elements 207 and 209 comprise an air gap. The first end (top portion) of the reluctance elements 207 and 209 are coupled to a bottom portion of the magnetic flux collector members 208 and 231, respectively. The second end (bottom portion) of the reluctance elements 207 and 209 are coupled to a top portion of a pole piece element 211. The pole piece element 211 is thereby coupled to the magnetic flux collector members 208 and 231 via the first and second ends of the reluctance elements 207 and 209. In one embodiment, the pole piece comprises a ferromagnetic material placed on magnetic poles and is used to shape and alter the effect of lines of flux. The pole piece is used to control, direct, intensify, or isolate the lines of magnetic flux. In one embodiment, the magnetic circuit 200a comprises a solenoid adapted to actuate a mechanical part 214.

Referring again to FIGURE 2a, the pole piece element 211 is mechanically coupled to a spring 212 positioned at a bottom portion of the pole piece element 211. The spring element 212 is mechanically coupled to a top portion of the mechanical part 214, wherein the mechanical part 214 comprises a moving part actuated in part by the spring element 212. In one embodiment, the mechanical part 214 comprises an armature. Also positioned at a bottom portion of the pole piece element 211 are a second set of reluctance elements 270 and 271, which function to magnetically couple a first and second bottom portion of the pole piece element 211 to the mechanical part 214. In one embodiment, the second set of reluctance elements 270 and 271 comprise air gaps. In the embodiment wherein the second set of reluctance elements 270 and 271 comprise air gaps, the air gaps have a manufacturing dimension associated therewith. In one embodiment, the manufacturing dimension for the second set of reluctance elements 270 and 271 comprising air gaps is 0.5 millimeters. In another embodiment, the manufacturing dimension for the second set of reluctance elements 270 and 271 comprising air gaps is 1 millimeter. Other convenient manufacturing dimensions may be used without departing from the spirit and scope of the present teachings.

Referring now to FIGURE 2b, another embodiment of an improved magnetic circuit is disclosed. The embodiment illustrated in FIGURE 2b is identical in all respects the embodiment of FIGURE 2a, except that the circuit of FIGURE 2b includes a selected quantity of flux-enhancing material 210. The flux-enhancing material 210 is disposed within the first and second ends of the reluctance elements 207 and 209 and also disposed between the magnetic flux collector members 208 and 231. The flux-enhancing material 210 is adapted to reduce magnetic flux loss across the reluctance elements 207 and 209. When the magnetic circuit 200b is turned on, magnetic flux flows through the magnetic circuit 200b. In one embodiment, the flux-enhancing material 210 comprises metal powder, such as for example iron powder. In one embodiment, the flux-enhancing material 210 comprises iron-filings. In yet another embodiment, the flux-enhancing material comprises a semi-metallic powder.

Referring now to FIGURE 2c, another embodiment of an improved magnetic circuit is disclosed. The magnetic circuit 200c shown in FIGURE 2c is identical to the magnetic circuit 200b, of FIGURE 2b, except that the magnetic circuit 200c is shown in switched-on configuration. Lines of flux are shown in the circuit of FIGURE 2c.

Referring again to FIGURE 2c, when the magnetic circuit 200c is switched on, force lines of magnetic flux flow inside the external canisters 204 and 234, and then through the set of magnetic flux collector members 208 and 231, as illustrated by a series of dashed lines. As the lines of magnetic flux descend down through the set of magnetic flux collector members 208 and 231, the flux lines pass through the reluctance elements 207 and 209 via the flux-enhancing material 210. As the flux lines pass across the reluctance elements 207 and 209, the flux passes into the pole piece 211. After passing through the pole piece 211, the lines of flux pass through the second set of reluctance elements 270 and 271 and into the mechanical part 214. As illustrated in FIGURE 2c, the force lines of flux from the mechanical part 214 flow across a set of air gaps 216 and 218 to a set of lower magnetic flux collectors 213 and 232, thereby completing the magnetic circuit. The set of lower magnetic flux collectors 213 and 232 are operatively coupled to the external canisters 204 and 234.

In one embodiment, when upper assembly and lower assembly portions of a solenoid are fitted together at a production facility, reluctance elements 207 and 209 comprise air gaps. As described above, variations in air gaps can cause variations in an amount of magnetic flux passing through the air gaps, which can substantially change the responsiveness and performance of a magnetic circuit in the solenoid. By adding the flux-enhancing material 210, such variations in assembly is diminished, or eliminated altogether, as the force lines of magnetic flux are "focused", that is maximized, across the air gaps, such that any loss of flux associated with the magnetic circuit in the assembly process of the upper and lower assemblies is minimized. Hence, the present teachings eliminate the prior art need for a calibration feature.

As described above, the loss of magnetic flux is higher when passed through an air gap as compared to through a material, such as iron. Contrasting magnetic flux loss through different elements of the magnetic circuit 200c is instructive to understanding the present teachings. As noted above, in one embodiment, the flux-enhancing material 210 comprises iron powder. By filling the first set of reluctance elements 207 and 209 with the flux enhancing materials, magnetic flux loss is reduced. The flux-enhancing material 210 enhances and conserves the magnetic flux that passes from the flux collector members 208 and 231, through the reluctance elements 207 and 209, and into the pole piece 211. The flux enhancing property is useful when adapted to reduce manufacturing variations at a production facility. When the upper assembly and the lower assembly are fitted together, the predetermined flux-enhancing material 210 aids in reducing flux variations between the upper assembly and the lower assembly. As described above, the prior art calibration feature 102 of FIGURE 1 was used to compensate for manufacturing variations by having production personnel adjust the solenoid subsequent to manufacture. The present inventive teachings eliminate the need for such a calibration feature, because any manufacturing variations in assembly are reduced or eliminated via the flux enhancing material and use in the present solenoid.

As described above in more detail in a calibration feature 102 required in the solenoid 100 of FIGURE 1. As previously described, the calibration feature 102 is required in order to allow production testing personnel at a manufacturing facility to properly "tune" the solenoid 100. As described above in more detail, the solenoid 100 is "tuned" to ensure solenoid performance. The "tuning" is required due to manufacturing variations that causes corrections in the dimensions of the air gap 104. Variations in the air gap 104 directly affect the amount of magnetic flux loss. If the air gap 104 is wider than specified, more magnetic flux loss than desired will be incurred. For example, if the specification requires that the air gap 104 comprise 1 millimeter, there may be a manufacturing variation of 0.5 millimeters. Hence, there may be as much as a 1.5 millimeter air gap, which yields a large difference in magnetic flux loss crossing over the air gap 104.

By contrast, the magnetic circuit 200c does not require any mechanical "tuning" during the manufacturing process. Therefore, the need for a calibration feature is removed. Instead of having a single air gap 104 that provides a reluctance element, the present teachings disclose a magnetic circuit 200c having a first set (207 and 209) and a second set of reluctance elements 270 and 271. The magnetic circuit 200c does not require any manufacturing variations "tuning". The flux-enhancing material (e.g., iron powder) reduces or eliminates any flux loss created during the manufacturing assembly process.

Referring now to FIGURE 2d, a lower assembly 200d of a magnetic circuit is illustrated. In one embodiment, the lower assembly 200d of the magnetic circuit is manufactured separately from an upper assembly, then subsequently fitted together with the lower assembly. In one embodiment, a second set of reluctance elements 270 and 271 are manufactured, such that a constant dimension of free space exists between a pole piece 211 and a mechanical part 214 (e.g., an armature). In one embodiment, the constant dimension of free space comprises 1 millimeter between the pole piece 211 and the mechanical part 214. In the illustrated embodiment, the air gap is positioned between the pole piece 211 and the mechanical part 214 because the mechanical part 114 actuates longitudinally with respect to the magnetic circuit 200d.

Referring now to FIGURE 2e, an upper assembly 200e of a magnetic circuit having no flux-enhancing material is illustrated. The upper assembly 200e of FIGURE 2e is manufactured separately from the lower assembly 200d of FIGURE 2d, and then subsequently assembled and fitted together with the lower assembly 200d.

Referring now to FIGURE 2f, an upper assembly 200f of an improved magnetic circuit having a selected quantity of flux-enhancing material 210 is illustrated. In one embodiment, the upper assembly 200f is manufactured, and then subsequently fitted together during production with the lower assembly 200d of FIGURE 2d. When assembled together, assembly variations between the upper assembly 200f and the lower assembly 200d results. Such assembly variations, in one example, may result in air gap variations of 0.5 millimeters. As mentioned above, these assembly variations can produce variations in magnetic circuit performance. However, in one embodiment, because the flux-enhancing material (e.g., iron powder) is inserted within the air gaps between the upper assembly 200f and the lower assembly 200d, the performance degradations caused by the assembly variations are reduced or eliminated. Magnetic flux lines are "focused" by the flux-enhancing material 210. Hence, the prior art calibration features are not required in the magnetic circuits of the present teachings.

Referring now to FIGURE 3, a method 300 of improving a manufacturing yield of magnetic circuits is disclosed. The method 300 begins at a STEP 302, of producing at least one magnetic circuit having an upper assembly having a first set of reluctance elements and a lower assembly having a second set of reluctance elements. In one embodiment, the first set of reluctance elements comprises a set of air gaps. The method proceeds to a STEP 304, whereat a dimension for the second set of reluctance elements is established. In one embodiment, the second set of reluctance elements comprises an air gap, and the dimension established during the STEP 304 comprises an air gap spacing (e.g., I millimeter). The air gap spacing is selected in order to hold the loss of magnetic flux to a constant value. At a next STEP 306, the method 300 proceeds by providing a selected quantity of flux-enhancing material. In one embodiment, the flux-enhancing material comprises iron powder.

At a STEP 308, the flux-enhancing material is inserted within the first set of reluctance elements of the magnetic circuit. In one embodiment, the first set of reluctance elements comprises a set of air gaps. In one embodiment, iron powder is inserted within the air gaps in order to "focus" the magnetic flux lines passing through the air gaps. As described above in more detail, less magnetic flux loss occurs in the air gaps that have iron powder inserted therein than occurs in the air gaps not having iron powder.

In a final STEP 310, the upper assembly is joined with the lower assembly. The joining of the upper assembly and the lower assembly completes the magnetic circuit. Although there may be some manufacturing variations created by the joining of the upper and the lower assemblies, such variations will not adversely affect circuit performance, due to the "focusing" effect of the iron powder. No post manufacturing or post-assembly "tuning" is required after the upper assembly is joined to the lower assembly. This reduces the costs associated with manufacturing of the circuit, and improves circuit performance.

The foregoing description illustrates exemplary implementations, and novel features, of aspects of an apparatus for correcting undesired characteristic associated with an incoming electrical signal. Alternative implementations are suggested, but it is impractical to list all alternative implementations of the apparatus. Therefore, the scope of the presented disclosure should be determined only by reference to the appended claims, and should not be limited by features illustrated in the foregoing description except insofar as such limitation is recited in an appended claim.

While the above description has pointed out novel features of the present disclosure as applied to various embodiments, the skilled person will understand that various omissions, substitutions, permutations, and changes in the form and details of the methods and systems illustrated may be made without departing from the scope of the present teachings.

Each practical and novel combination of the elements and alternatives described hereinabove, and each practical combination of equivalents to such elements, is contemplated as an embodiment of the present teachings. Because many more element combinations are contemplated as embodiments of the present teachings than can reasonably be explicitly enumerated herein, the scope of the present teachings is properly defined by the appended claims rather than by the foregoing description. All variations coming within the meaning and range of equivalency of the various claim elements are embraced within the scope of the corresponding claim. Each claim set forth below is intended to encompass any apparatus or method that differs only insubstantially from the literal language of such claim, as long as such apparatus or method is not, in fact, an embodiment of the prior art. To this end, each described element in each claim should be construed as broadly as possible, and moreover should be understood to encompass any equivalent to such element insofar as possible without also encompassing the prior art. Furthermore, to the extent that the term "includes" is used in either the detailed description or the claims, such term is intended to be inclusive in a manner similar to the term "comprising."

**Claims**

1. An improved magnetic circuit apparatus, comprising:

    a) a magnetic circuit assembly (200b) comprising:

        i) an external canister element (204, 234) magnetically coupled to a magnetic flux collector member (208, 231);
        ii) a first reluctance element (207, 209), having a top portion and a bottom portion, wherein the top portion is operatively coupled to the magnetic flux collector member (208, 23 1);
iii) a pole piece element (211) in magnetic communication with the magnetic flux collector member (208, 231) via the first reluctance element (207, 209), and

b) a selected quantity of flux-enhancing material (210), wherein the flux-enhancing material (210) is disposed between the top and bottom portions of the first reluctance element (207, 209), and wherein the flux-enhancing material (210) is adapted to reduce magnetic flux loss across the first reluctance element (207, 209) of the magnetic circuit.

2. The improved magnetic circuit apparatus of Claim 1, wherein the magnetic circuit comprises a solenoid.

3. The improved magnetic circuit apparatus of Claim 2, wherein the magnetic circuit is further adapted to actuate a mechanical part (214).

4. The improved magnetic circuit apparatus of Claim 3, wherein the actuated mechanical part (214) comprises an armature.

5. The improved magnetic circuit apparatus of Claim 1, wherein the reluctance element (207, 209) of the magnetic circuit comprises a first air gap.

6. The improved magnetic circuit apparatus of Claim 1, wherein the pole piece element (211) of the magnetic circuit is in magnetic communication with a second reluctance element (270, 271).

7. The improved magnetic circuit apparatus of Claim 6, wherein the second reluctance element (270, 271) of the magnetic circuit comprises a second air gap.

8. The improved magnetic circuit apparatus of Claim 1, wherein the flux-enhancing material (210) comprises metal powder.

9. An improved solenoid apparatus having a magnetic circuit, wherein the magnetic circuit is adapted to actuate a mechanical part (214), comprising:

a) an external canister element (204, 234) magnetically coupled to a magnetic flux collector member (208, 231);
b) an air gap, having a first end and a second end, wherein the first end is in magnetic communication with the magnetic flux collector member (208, 231);
c) a pole piece element (211) in magnetic communication with the magnetic flux collector member (208, 231) via the second end of the air gap; and
d) a selected quantity of iron powder, wherein the selected quantity of iron powder is disposed between the first and second ends of the air gap, and wherein the selected quantity of iron powder is adapted to reduce magnetic flux loss across the air gap.

10. A method (300) of improving manufacturing of magnetic circuits, comprising:

a) producing at least one magnetic circuit having an upper assembly (302), the upper assembly having a first reluctance element, and a lower assembly having a second reluctance element;
b) establishing a dimension for the second reluctance element (304);
c) providing a selected quantity of flux-enhancing material (306);
d) inserting the flux-enhancing material inside the first reluctance element (308); and
e) joining the upper assembly to the lower assembly (310).

**Amended claims in accordance with Rule 86(2) EPC.**

7. The improved magnetic circuit apparatus of Claim 6, wherein the second reluctance element (270, 271) of the magnetic circuit comprises a second air gap.

8. The improved magnetic circuit apparatus of Claim 1, wherein the flux-enhancing material (210) comprises metal powder.

**9.** The improved magnetic circuit apparatus of Claim 1, wherein the first reluctance element (207, 209) comprises an air gap having a first end in magnetic communication with the magnetic flux collector member (208, 231) and a second end in magnetic communication with the pole piece element (211), and wherein the flux-enhancing material (210) comprises iron powder.

**10.** A method of making the improved magnetic circuit apparatus of Claim 1, the method comprising:

producing the external canister element (204, 234) magnetically coupled to the magnetic flux collector member (208, 231), which is operatively coupled to the top portion of the first reluctance element (207, 209);
inserting the selected quantity of flux-enhancing material (210) inside the first reluctance element (207, 209) to form an upper assembly (200f); and
joining the pole piece element (211) of a lower assembly (200d) such that the pole piece element (211) is in magnetic communication with the magnetic flux collector member (208, 231) via the first reluctance element (207, 209).

102

104

100

FIGURE 1  (Prior Art)

204

206

208

207

211

212

270

213

214

200a

234

233

231

209

271

232

FIGURE 2a

FIGURE 2b

200b

204
206
208
210
207
211
212
270
213
214

234
233
231
209
271
232

FIGURE 2c

211

270
212

213

214

271

232

200d

FIGURE 2d

FIGURE 2e

FIGURE 2f

302 — Producing at least one magnetic circuit having an upper assembly and a lower assembly

304 — Setting a dimension

306 — Providing a selected quantity of flux-enhancing material

308 — Inserting flux-enhancing material

310 — Joining the upper assembly to the lower assembly

<u>300</u>

FIGURE 3

**EP 1 699 127 A1**

| | European Patent Office | EUROPEAN SEARCH REPORT | Application Number EP 06 00 4124 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 275 874 A (EATON CORPORATION) 15 January 2003 (2003-01-15) * column 2, paragraph 11 - column 4, paragraph 21; figures 1-3 * | 1-10 | INV. H02K41/03 H02K15/02 |
| A | US 2 407 963 A (PERSONS LAWRENCE M) 17 September 1946 (1946-09-17) * column 2, line 12 - column 3, line 47; figures 1,2 * | 1-10 | |
| A | US 2004/178378 A1 (COLLINS DAVID E ET AL) 16 September 2004 (2004-09-16) * abstract; figures 1-6 * | 1-10 | |
| A | US 4 647 008 A (SHIRAI ET AL) 3 March 1987 (1987-03-03) * column 4, line 31 - column 5, line 50; figures 1,2 * | 1-10 | |

TECHNICAL FIELDS SEARCHED (IPC)

H02K
H01F
F16K

The present search report has been drawn up for all claims

| Place of search | Date of completion of the search | Examiner |
|---|---|---|
| Munich | 4 May 2006 | Tangocci, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**EP 1 699 127 A1**

## ANNEX TO THE EUROPEAN SEARCH REPORT
## ON EUROPEAN PATENT APPLICATION NO.

EP 06 00 4124

This annex lists the patent family members relating to the patent documents cited in the above-mentioned European search report.
The members are as contained in the European Patent Office EDP file on
The European Patent Office is in no way liable for these particulars which are merely given for the purpose of information.

04-05-2006

| Patent document cited in search report | | Publication date | Patent family member(s) | | Publication date |
|---|---|---|---|---|---|
| EP 1275874 | A | 15-01-2003 | CA | 2393146 A1 | 13-01-2003 |
| | | | JP | 2003106473 A | 09-04-2003 |
| | | | MX | PA02006910 A | 13-12-2004 |
| | | | US | 2003010951 A1 | 16-01-2003 |
| US 2407963 | A | 17-09-1946 | NONE | | |
| US 2004178378 | A1 | 16-09-2004 | DE | 102004012526 A1 | 21-10-2004 |
| US 4647008 | A | 03-03-1987 | JP | 1847614 C | 07-06-1994 |
| | | | JP | 5059307 B | 30-08-1993 |
| | | | JP | 61052474 A | 15-03-1986 |

EPO FORM P0459

For more details about this annex : see Official Journal of the European Patent Office, No. 12/82